# EUROPEAN PATENT SPECIFICATION

(11) **EP 4 457 017 B1**
(45) Date of publication and mention of the grant of the patent: **17.09.2025**
(21) Application number: 22835647.3
(22) Date of filing: 12.12.2022
(51) Int. Cl.: B01J 19/06, B01J 19/24, C08F 6/12, B29B 9/00, B29B 15/04, C08C 1/14, B29B 7/00, B29B 7/44, B29B 7/74, B29B 9/10, B29B 9/12, C08F 6/22

(54) **METHOD AND SYSTEM FOR MANUFACTURE OF PARTICULATE POLYMERS**
VERFAHREN UND SYSTEM ZUR HERSTELLUNG VON TEILCHENFÖRMIGEN POLYMEREN
PROCÉDÉ ET SYSTÈME DE FABRICATION DE PARTICULES DE POLYMÈRES

(30) Priority: 27.12.2021 EP 21217792
(43) Date of publication of application: 06.11.2024
(73) Proprietor: SABIC Global Technologies B.V., 4612 PX Bergen op Zoom (NL)
(72) Inventor: ALSUBAIE, Nasser Mansour, 6160 GA Geleen (NL); YOUSSEF, Ahmed Abouelfetouh, 6160 GA Geleen (NL); WHITE, Allen Lee, 6160 GA Geleen (NL); ELSHOKAFY, Ahmed Ragab, 6160 GA Geleen (NL); WANG, Shi, 6160 GA Geleen (NL)
(74) Representative: Sabic Intellectual Property Group
(86) International application number: PCT/EP2022/085304
(87) International publication number: WO 2023/126162

(56) References cited:
- WO-A1-2011/057038
- BE-A- 880 827
- CN-A- 110 252 237
- JP-A- S5 763 332
- US-A- 2 561 256
- US-A- 4 110 491
- US-A- 4 890 929

## Description

### BACKGROUND

Emulsion polymerization is a type of radical polymerization and has been used to produce of a variety of polymers, including for example acrylonitrile-butadiene styrene (ABS), styrene-butadiene styrene (SBS), methyl methacrylate-butadiene styrene (MBS), acrylonitrile styrene acrylate (ASA), polytetrafluoroethylene-styrene-acrylonitrile (TSAN) and styrene acrylonitrile (SAN). In such emulsion polymerization processes, a reaction mixture, and optionally additives for initiation and control of the reaction and emulsifying agent(s) may be combined with a liquid medium, thereby forming an emulsion, which is subjected to conditions for polymerization. During the polymerization, a polymer latex is formed. Such polymer latex may be understood to be a colloidal distribution of polymeric particles in the liquid medium.

In order to obtain the desired polymer as a particulate product from the process, the polymeric particles that are present in the polymer latex need to be isolated. This can be achieved by the addition of a coagulant to break the polymer latex. During this coagulation process, the original particles in the latex are agglomerated to form bigger particles. While various coagulation processes are known in the art, foam and chunk formation can be observed in the coagulation system in addition to not achieving the targeted particle size distribution. Accordingly, there is a continuing need for an improved process and system for manufacturing particulate polymers.

JPS5763332 relates to a preparing apparatus of a coagulated latex having a means for preventing the adhesion of reactants in the top of a coagulating cylinder and a latex sprayer.

US4110491A relates to a method and apparatus for encapsulating and coagulating an elastomeric latex wherein the latex is introduced as drops into an encapsulating-coagulating liquid via a draft tube through which the encapsulating-coagulating liquid is impelled downwardly in generally linear flow.

CN110252237A relates to a kind of process equipment for the deamination of colloidal liquid recycling and reusing that natural emulsion generates

US2561256A relates to the separation of solid polymers in substantially dry condition from slurries in liquids.

US4890929A relates to a method of manufacturing coagulated grains from polymer latex and apparatus for exercising this method.

BE880827A relates to a latex coagulation method and apparatus.

### SUMMARY

A method of manufacturing a particulate polymer comprises:
introducing a polymer latex into a vessel;
distributing the polymer latex in the vessel to a coagulator via a distribution member and a redistribution member,
   wherein
   the coagulator is equipped with an agitator having an agitator shaft;
   the distribution member is mounted on the agitator shaft and extending upwardly into the vessel through a bottom wall of the vessel, the distribution member having an open top in the vessel and an opposite open bottom facing the coagulator; and
   the redistribution member is mounted on the agitator shaft, the redistribution member having an open top facing the open bottom of the distribution member; and
   wherein the polymer latex in the vessel enters the open top and exits the open bottom of the distribution member and flows into the redistribution member, and the polymer latex in the redistribution member overflows into the coagulator;
introducing a coagulant and steam into the coagulator;
mixing the polymer latex, the coagulant, and the steam to break the polymer latex forming the particulate polymer; and
separating the particulate polymer from a liquid in the coagulator.

A system for manufacturing a particulate polymer comprises:
a coagulator equipped with an agitator having an agitator shaft;
a distribution member mounted on the agitator shaft and extending upwardly into a vessel through a bottom wall of the vessel, the distribution member having an open top in the vessel and an opposite open bottom facing the coagulator;
a redistribution member mounted on the agitator shaft, the redistribution member having an open top facing the distribution member; and
a coagulant dispensing means for introducing a coagulant into the coagulator,
wherein the distribution member and the redistribution member are configured such that a polymer latex in the vessel is flowed into the redistribution member via the open bottom of the distribution member, and the polymer latex in the redistribution member overflows into the coagulator.

### BRIEF DESCRIPTION OF THE DRAWINGS

A description of the figures, which are meant to be exemplary and not limiting, is provided in which:
FIG. 1 illustrates a system for manufacturing a particulate polymer;
FIG. 2 illustrates the introduction of a polymer latex from a vessel to a coagulator via a distribution member and a redistribution member;
FIG. 3 illustrates a coagulant spray ring;
FIG. 4 illustrates the injection of steam jets into a coagulator;
FIG. 5 is a graph of weight percent versus particle size showing the particle size distributions of ABS made in the inventive process and the comparative process;
FIG. 6 is a boxplot showing the moisture percent of the wet ABS (cake) made in the inventive process and the comparative process;
FIG. 7 is a boxplot showing the residual acid contents in the ABS made in the inventive process and the comparative process.

The above described and other features are exemplified by the following detailed description and Examples.

### DETAILED DESCRIPTION

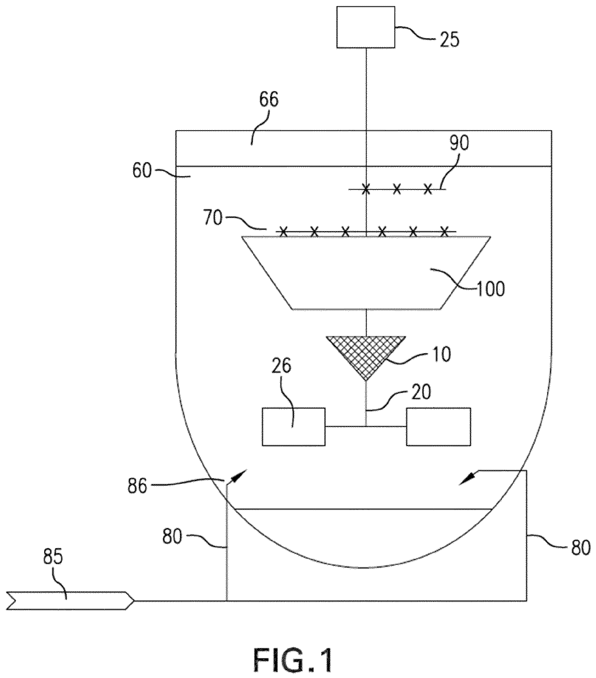

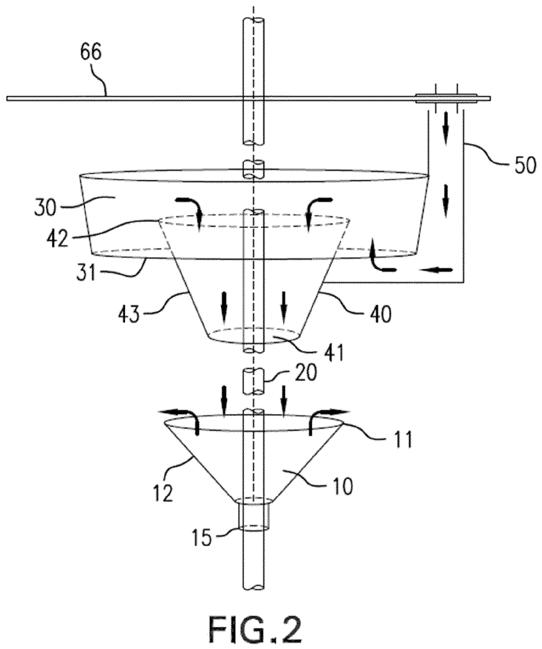

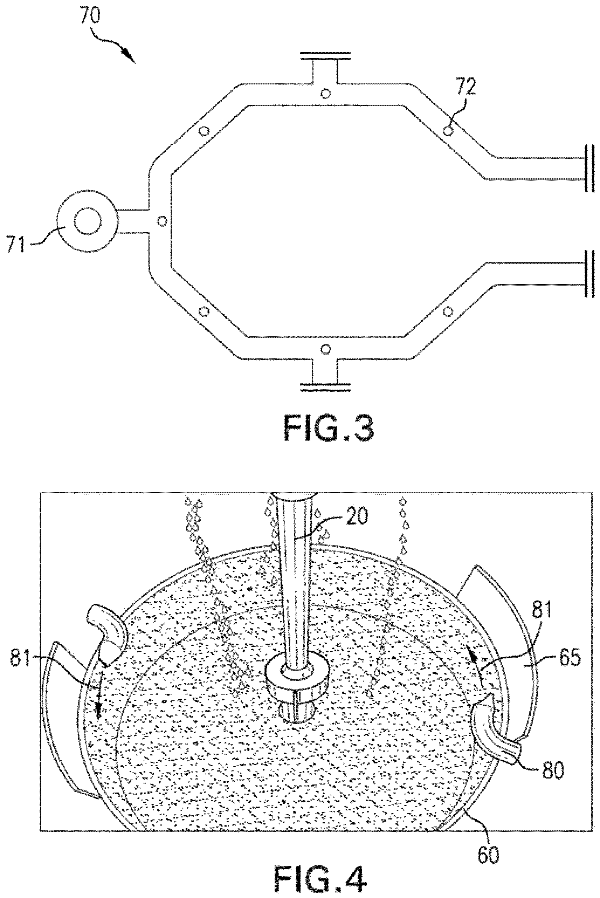

Process and system for producing particulate polymers having controlled particle size distribution and minimized chuck/foam formation are disclosed. Referring to FIGS. 1-4, the system comprises a coagulator (60) equipped with an agitator having an agitator shaft (20); a distribution member (40) mounted on the agitator shaft (20) and extending upwardly into a vessel (30) through a bottom wall (31) of the vessel (30), the distribution member (40) having an open top (42) in the vessel (30) and an opposite open bottom (41) facing the coagulator (60); a redistribution member (10) mounted on the agitator shaft (20), the redistribution member (10) having an open top (11) facing the distribution member (40); and a coagulant dispensing means (70) for introducing a coagulant into the coagulator (60). The vessel (30) and the distribution member (40) together are also referred to as weir box (100). The weir box can be at the center of the coagulator (60) around agitator shaft (20).

The coagulator (60) is where the coagulation takes place. The coagulator (60) is equipped with an agitator, which can have, in addition to the agitator shaft (20), a motor (25) and a blade (26). The agitator can be at the center of the coagulator (60). The coagulator (60) has a jacket (65) to control a temperature of the polymer latex and the coagulant in the coagulator. Optionally the coagulator (60) has a cover (66).

The vessel (30) holds the polymer latex which is to be distributed to coagulator (60). The polymer latex can be introduced into the vessel (30) through a tubular member (50) via an inlet disposed on the bottom wall (31) of the vessel (30). The polymer latex can also be added to the vessel (30) from the open top of the vessel (30) or through the side walls of the vessel (30).

The latex in the vessel (30) is distributed into the coagulator (60) via the distribution member (40) and the redistribution member (10). The distribution member (40) has a frustoconical wall (43) defining an open top (42) in the vessel (30) and an opposite open bottom (41) facing the coagulator (60). The open top (42) of the distribution member can have a larger surface area than the open bottom (41) of the distribution member.

The redistribution member (10) is also mounted on the agitator shaft (20). The redistribution member (10) has a frustoconical wall (12) defining an open top (11) facing the open bottom (41) of the distribution member (40), and a second bottom wall (15) secured to the frustoconical wall (12) and the agitator shaft (20). The redistribution member (10) can rotate with the agitator shaft (20).

The coagulant dispending means (70) can be a coagulant spray ring having an inlet (71) for introducing a coagulant into the spray ring means and at least two evenly spaced nozzles (72) for adding the coagulant directly into the coagulator (60). The coagulant spray ring is a larger size ring outside of weir box (100) and close to the coagulator wall. The weir box is smaller size, which is at the center of coagulator (60) around agitator shaft (20). Both the coagulant spray ring and weir box (100) can be at the similar vertical level.

The system further comprises a steam jet injector configured to inject a steam jet (86) into the coagulator (60). Preferably the steam jet injector is configured to inject at least two steam jets (86) into the coagulator (60) via separate lines (80).

A method of manufacturing a particulate polymer comprises: introducing a polymer latex into a vessel; distributing the polymer latex in the vessel to a coagulator via a distribution member and a redistribution member; introducing a coagulant, steam, and optionally water into the coagulator; mixing the polymer latex, the coagulant, the steam, and the optional water to break the polymer latex forming the particulate polymer; and separating the particulate polymer from a liquid in the coagulator.

The methods of introducing the polymer latex into the vessel (30) are not particularly limited. Preferably at least a portion of the polymer latex is introduced into the vessel (30) via an inlet at the bottom wall (31) of the vessel (30). Once the polymer latex in the vessel (30) reaches a level that is higher than the top surface of the distribution member (40), the polymer latex in the vessel enters the open top (42) of the distribution member (40) and exits its open bottom (41) and flows into the redistribution member (10). The polymer latex in the redistribution member (10) can then overflow into the coagulator (60). Because the redistribution member (10) is mounted on the shaft (20), and the overflow of the polymer latex is along all the directions of the circular edge of the frustoconical wall (12) that defines the open top (11), the polymer latex can be fed evenly and directly into the high shear region in the coagulator (area near agitator blade) to achieve the best coagulation effect, and to improve the control on coagulation.

The coagulant feeding as described herein also contributes to the controlled agglomeration. Preferably, the coagulant is introduced directly into the coagulator (60) via the at least two evenly spaced nozzles (72). Because the coagulant spray ring is a larger size ring close to the coagulator wall, the coagulant can be evenly added to the low shear region in the coagulator (area away from the agitator blade). As disclosed herein, the polymer latex can be fed evenly and directly into the high shear region in the coagulator (area near agitator blade). Thus the method avoids the early contact of the polymer latex with the coagulant, which may lead to foam and chunk. By using the system as described herein, the method also allows for the uniform mixing of the coagulant and the polymer latex in the vortex zone created by the steam jets.

A pressured steam injection into the coagulator (60) can facilitate the mixing of various components in the coagulator. Steam jets can also help to achieve the desired mixing temperature. There can be at least two steam jets (86) in the coagulator (60) which are symmetrically positioned. The steam jets are below a liquid surface in the coagulator and are in the direction of vortex flow (81) to ensure vortex in the coagulator (60) is circular and to enhance high shear mixing. In addition to steam, water can be introduced into the coagulator (60) via nozzles (90).

The polymer latex, the coagulant, the steam, and the optional water introduced into the coagulator (60) can be mixed to break the polymer latex forming the particulate polymer. A Rushton turbine agitator can be used in the coagulator to achieve the high shear mixing. The mixing can be conducted at a temperature of 80 to 100°C, 85 to 95°C or 88 to 94°C. Using the system and the method described herein, the polymer latex, the coagulant, water, and the steam can be homogeneously mixed in the coagulator.

As a result of the coagulation process, polymeric particles agglomerate and settle at the top or at the bottom of the coagulation unit. The polymeric particles may subsequently be separated from the aqueous phase. The isolation of the coagulated product may be conducted using conventional means for separating solid/liquid systems such as filtration and centrifugation. The isolated product can be dried if desired.

The process can be a continuous process. The flowrates can be metered and ratioed based on the latex feed rate. Coagulant to latex flow ratio can be 0.05 to 0.065, or 0.057 to 0.061. The residence time of various components in the coagulator can be 1 to 20 minutes.

The particulate polymer prepared in accordance with the process described herein can have a narrower particle size distribution and/or a higher percentage of particles within the desired particle size range. In particular, 35 to 50 wt% of the particulate polymer can have a size that is less than 850 microns but greater than 150 microns. In addition, less than 27 wt%, less than 26 wt%, or 10 to 26 wt%, 15 to 26 wt%, or 18 to 25 wt% of the particulate polymer prepared in accordance with the process described herein has a particle size of greater than 850 microns. As used herein, the particle size distribution is determined by sieve analysis.

The particulate polymer prepared in accordance with the process described herein also has reduced %cake moisture content and reduced residual acid as compared with particulate polymer prepared in accordance with a comparative process using a coagulation system that does not include a weir box as described herein.

As used herein, a polymer latex may be understood to be an aqueous system comprising polymeric particles in dispersion. For example, a polymer latex may comprise 20.0 - 60.0 wt% of polymeric particles with regard to the total weight of the polymer latex. Preferably, the polymer latex comprises 25.0 - 55.0 wt% of polymeric particles with regard to the total weight of the polymer latex. More preferably, the polymer latex comprises 30.0 - 50.0 wt% of polymeric particles with regard to the total weight of the polymer latex.

Such polymeric particles may for example have an average particle size of 60 to 500 nanometers (nm). Preferably, the polymeric particles have an average particle size of 150 to 500 nm. The average particle size may for example be determined according to ASTM D1417 (2010).

The polymer latex comprises a polymer of one or more monomers of a vinyl aromatic monomer, an acrylate, an unsaturated cyanide, or a diene.

Suitable vinyl aromatic monomers include for example styrene, α-methyl styrene, halostyrenes such as dibromostyrene, vinyltoluene, vinylxylene, butylstyrene, p-hydroxystyrene, methoxystyrene, or combinations thereof. Particularly suitable vinyl aromatic monomers are for example styrene and α-methyl styrene. It is preferred that the vinyl aromatic monomer is styrene.

Suitable unsaturated cyanides include for example acrylonitrile, methacrylonitrile, ethacrylonitrile, α-chloroacrylonitrile, α-bromoacrylonitrile, or combinations thereof. It is preferred that the vinyl cyanide is acrylonitrile.

Suitable dienes include for example butadiene, isoprene, chloroprene, 2-methyl-1,3-butadiene, 2,3-dimethyl-1,3-butadiene, 1,2-propadiene, 1,4-pentadiene, 1,2-pentadiene, 1,5-hexadiene, or combinations thereof. It is preferred that the diene is butadiene.

Examples of acrylates include methyl acrylate, ethyl acrylate, butyl acrylate, 2-ethylhexyl acrylate, cyclohexyl acrylate, benzyl acrylate, isopropyl acrylate, methyl methacrylate, ethyl methacrylate, butyl methacrylate, isopropyl methacrylate, cyclohexyl methacrylate, vinyl acetate, dimethyl maleate, diethyl maleate, or combinations thereof. The preferred acrylate is methyl acrylate or methyl methacrylate or a combination thereof.

The polymer in the latex can be at least one of acrylonitrile-butadiene styrene (ABS), styrene-butadiene styrene (SBS), methyl methacrylate-butadiene styrene (MBS), acrylonitrile styrene acrylate (ASA), polytetrafluoroethylene-styrene-acrylonitrile (TSAN), or styrene acrylonitrile (SAN). In one example the polymer latex can be an acrylonitrile-butadiene styrene latex, particularly with 30 to 80% butadiene rubber based on total weight of the ABS in the latex.

As used herein, the coagulant is understood to contribute to the destabilization of the aqueous dispersion of the polymeric particles in the latex. The coagulant may for example be at least one of an acid, such as sulfuric acid, hydrochloric acid, acetic acid, nitric acid, and phosphoric acid; an alkali metal salt; an alkaline earth metal salt; or an ammonium salt. The alkali and alkaline earth metal salts can be alkali metal halides, alkali metal halides, alkali metal sulphates, or alkaline earth metal sulphates. Examples of alkali and alkaline earth metal salts include sodium chloride, sodium sulfate, and calcium chloride. Examples of ammonium salt include ammonium acetate and alum. Combinations of two or more of the coagulant can be used. The coagulant may for example be added to the polymer latex in such quantity as to ensure a pH of the polymeric latex of ≤ 5.0.

The methods of manufacturing polymers having the controlled particle size distribution are further illustrated by the following non-limiting examples.

### EXAMPLES

In the inventive example, the system as illustrated in FIG. 1 was used. The coagulator was equipped with an agitator, two steam jets, a coagulant spray ring, a weir box, and a redistribution member, where the weir box includes a vessel and a distribution member. An ABS latex in the vessel flowed into the redistribution member via the distribution member. The polymer latex in the redistribution member overflowed evenly into the high shear zone (vortex zone) of the coagulator. The coagulant spray ring had multiple nozzles, and distributed a coagulant (sulfuric acid) evenly into the coagulator. The flow of the latex and coagulant were controlled, and the coagulant to latex flow ratio was kept at 0.055. Two steam jets were introduced to the coagulator at the opposite wall of the coagulator, both at the agitation direction.

During the coagulation, the agitator was run to promote the mixing in the coagulator tank, and all the components in the coagulator were mixed at 90°C. The steam jets provided velocity to improve the mixing, heating, and forming a vortex in the tank. In the continuous process, the residence time of the components in the coagulator was about 5 minutes. The generated ABS particles was separated from the liquid phase through centrifugation.

In a comparative example, the coagulator was equipped with an agitator, two steam jets and a coagulant spray ring only. The coagulation process is similar to the process of the inventive example, except that the latex feed was directly added to the vortex zone without using a weir box. Without wishing to be bound by theory, it is believed that under this situation, the latex feed is highly concentrated in a very small area and then mixed with the coagulant, and therefore, the coagulation is not well controlled.

### RESULTS

### ABS RESIN PARTICLE SIZE DISTRIBUTION

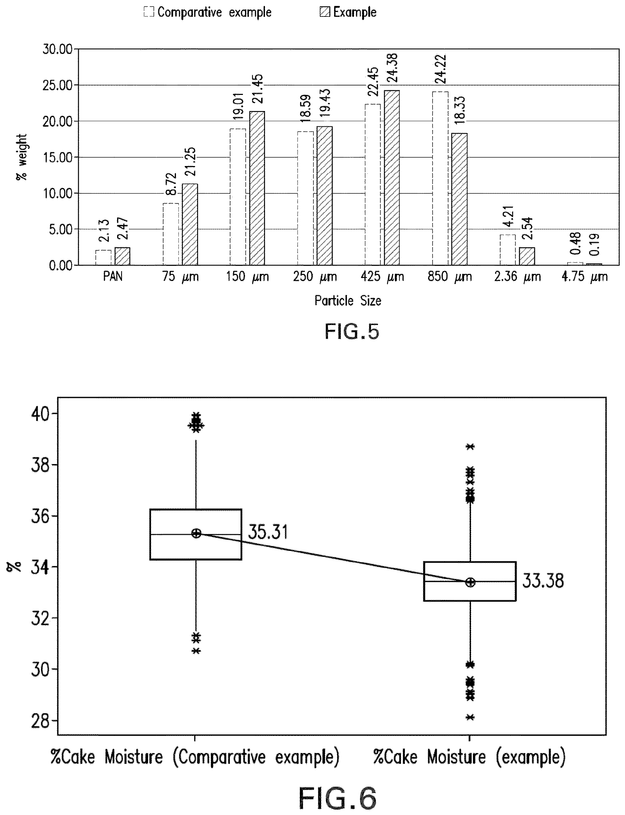

A 20-cm diameter test sieve set, consisting of 4, 8, 20, 40, 60, 100 and 200-mesh sieves, a cover and a pan was used to determine the particle size distribution of the ABS products. In the sieve analysis, a weighed sample was blended with an antistatic agent and sifted through a set of standard tared sieves. The sieves were reweighed to determine the percentage of sample retained on each sieve. The results are summarized in Table 1 and graphically illustrated in FIG. 5.

**Table 1.**

| | Comparative Example | | Example | |
|---|---|---|---|---|
| | Ave (weight percent) | SD | Ave (weight percent) | SD |
| PAN | 2.13 | 3.14 | 2.47 | 3.39 |
| 75 µm | 8.72 | 4.86 | 11.25 | 7.87 |
| 150 µm | 19.01 | 4.86 | 21.45 | 4.30 |
| 250 µm | 18.59 | 3.21 | 19.43 | 3.35 |
| 425 µm | 22.45 | 3.81 | 24.38 | 5.93 |
| 850 µm | 24.22 | 5.97 | 18.33 | 4.61 |
| 2.36 mm | 4.21 | 2.66 | 2.54 | 3.39 |
| 4.75 mm | 0.48 | 1.00 | 0.19 | 0.51 |

Too fine particles are not desired as they may be lost in the downstream recovering process or may lead to troubles in resin powders followability. Too large particles are not desired either because it may lead to chunk formation and asset reliability (i.e. pump/pipe plugging). As shown in Table 1 and FIG. 5, the ABS prepared with the inventive process has a narrower particle size distribution as there are fewer large particles with a size of > 4.75 mm and similar percentage of fine particles with a size of < 75 µm as compared to the ABS made from the comparative process. In addition, the ABS prepared with the inventive process have higher percentage of particles in the 250-425 µm range as compared to the ABS made with the comparative process.

### PERCENT CAKE MOISTURE

%Cake moisture refers to the water content in the wet resin (cake) that comes out of the centrifuge process. The % cake moisture was measured using moisture analyzer equipment (i.e. Mettler Toledo HX204 halogen moisture analyzer). A halogen bulb inside the equipment chamber heated the sample to a pre-determined temperature and drove off all volatiles in the sample. The weight loss of the sample was used to calculate moisture content, and the results are summarized in Table 2 and graphically illustrated in FIG. 6.

**Table 2.**

| | Comparative Example | | Example | |
|---|---|---|---|---|
| | Ave | SD | Ave | SD |
| %Cake Moisture | 35.31 | 1.61 | 33.38 | 1.43 |

The data shows that the mean of %Cake Moisture has significantly reduced when the ABS is prepared according to the inventive process as compared to the ABS made in the comparative process using a comparative system. The results indicate that dewatering efficiency has improved as result of controlling the particle size distribution.

### RESIDUAL ACID

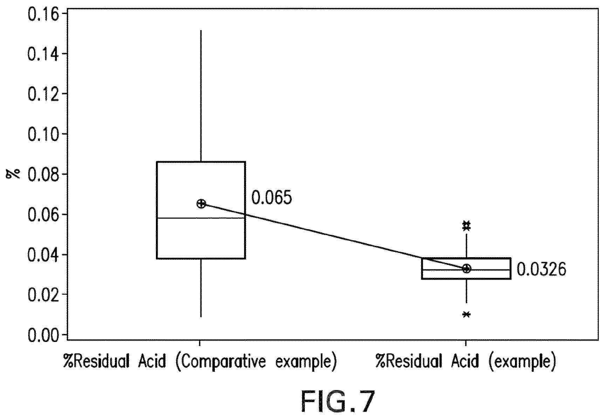

Resin residual acid was measured through a non-aqueous dynamic titration, in which a weighed amount of the ABS was dispersed in an acetone/isopropanol/water solution, and an auto-titrator was used to dispense a standardized KOH/methanol solution into the ABS sample. The pH of the solution was monitored until an equivalence point was reached. The instrument was programmed to automatically select the equivalence point, or "steepest jump" in the titration curve, and the concentration of acid was output to the instrument's display panel in terms of mass percent. The results are summarized in Table 3 and graphically represented in FIG. 7.

**Table 3.**

| | Comparative Example | | Example | |
|---|---|---|---|---|
| | Ave | SD | Ave | SD |
| %Residual Acid | 0.065 | 0.032 | 0.0326 | 0.008 |

The data shows that the mean of %Residual Acid has significantly reduced when the ABS is prepared in accordance with the inventive process as compared to ABS made in the comparative process using the comparative coagulation system.

The singular forms "a," "an," and "the" include plural referents unless the context clearly dictates otherwise. The endpoints of all ranges directed to the same component or property are inclusive and independently combinable. "Optional" or "optionally" means that the subsequently described event or circumstance can or cannot occur, and that the description includes instances where the event occurs and instances where it does not. Unless defined otherwise, technical and scientific terms used herein have the same meaning as is commonly understood by one of skill in the art to which this invention belongs. As used herein, a "combination" is inclusive of blends, mixtures, alloys, reaction products, and the like.

## Claims

1. A method of manufacturing a particulate polymer, the method comprising:
introducing a polymer latex into a vessel (30);
distributing the polymer latex in the vessel (30) to a coagulator (60) via a distribution member (40) and a redistribution member (10);
wherein
the coagulator (60) is equipped with an agitator having an agitator shaft (20) (20),
the distribution member (40) is mounted on the agitator shaft (20) (20) and extending
upwardly into the vessel (30) through a bottom wall (31) of the vessel (30), the distribution member (40) having an open top (42) in the vessel (30) and an opposite open bottom (41) facing the coagulator (60), and
the redistribution member (10) is mounted on the agitator shaft (20), the redistribution
member having an open top (42) facing the open bottom (41) of the distribution
member, and
wherein the polymer latex in the vessel (30) enters the open top (42) and exits the
open bottom (41) of the distribution member (40) and flows into the redistribution member (10), and the polymer latex in the redistribution member overflows into the coagulator (60);
introducing a coagulant, and steam into the coagulator (60);
mixing the polymer latex, the coagulant, and the steam to break the polymer latex forming the particulate polymer; and
separating the particulate polymer from a liquid in the coagulator (60).

2. The method of claim 1, wherein further comprising introducing the polymer latex to the vessel (30) via an inlet disposed at the bottom wall (31) of the vessel (30).

3. The method of claim 1 or claim 2, wherein the polymer latex comprises a polymer of one or more monomers of a vinyl aromatic monomer, an acrylate, an unsaturated cyanide, or a diene.

4. The method of any one of claims 1 to 3, wherein the coagulant is introduced directly into the coagulator (60) via two or more evenly spaced nozzles (90) of a coagulant spray ring.

5. The method of any one of claims 1 to 4, wherein the coagulant is at least one of an acid; an alkali metal salt; an alkaline earth metal salt; or an ammonium salt.

6. The method of any one of claims 1 to 5, wherein the steam is injected into the coagulator (60) as a steam jet (86) below a liquid surface in the coagulator (60) in a direction of vortex flow (81).

7. The method of claim 6, wherein the steam is injected into the coagulator (60) as at least two steam jets (86) in the direction of vortex flow (81).

8. The method of any one of claims 1 to 7, wherein the polymer latex, the coagulant, and the steam are homogeneously mixed in the coagulator (60).

9. The method of any one of claims 1 to 8, wherein less than 27 wt% of the particulate polymer has a particle size of greater than 850 microns.

10. A system for manufacturing a particulate polymer, according the method of any one of claims 1-9 the system comprising:
a coagulator (60) equipped with an agitator having an agitator shaft (20);
a distribution member (40) mounted on the agitator shaft (20) and extending upwardly into a vessel (30) through a bottom wall (31) of the vessel (30), the distribution member (40) having an open top (42) in the vessel (30) and an opposite open bottom (41) facing the coagulator (60);
a redistribution member (10) mounted on the agitator shaft (20), the redistribution member (10) having an open top (11)
facing the distribution member (40); and
a coagulant dispensing means (70) for introducing a coagulant into the coagulator (60),
wherein the distribution member (40) and the redistribution member (10) are configured such that a polymer latex in the vessel (30) is flowed into the redistribution member (10) via the open bottom (41) of the distribution member (40), and the polymer latex in the redistribution member (10) overflows into the coagulator (60).

11. The system of claim 10, wherein the distribution member (40) has a frustoconical wall (43) defining the open top (42) and the open bottom (41), and the open top (42) of the distribution member (40) has a larger surface area than the open bottom (41) of the distribution member (40).

12. The system of claim 10 or 11, wherein the redistribution member (10) has a frustoconical wall (12) defining the open top (11) facing the open bottom (41) of the distribution member (40).

13. The system of any of claims 10 to 12, further comprising a tubular member (50) to introduce the polymer latex into the vessel (30) via an inlet disposed on the bottom wall (31) of the vessel (30).

14. The system of any one of claims 10 to 13, wherein the coagulant dispending means (70) is a coagulant spray ring having at least two evenly spaced nozzles (72) for introducing the coagulant directly into the coagulator (60).

15. The system of any one of claims 10 to 14, further comprising a steam jet (86) injector configured to inject at least two steam jets (86) into the coagulator (60).

## Patentansprüche

1. Verfahren zum Herstellen eines teilchenförmigen Polymers, wobei das Verfahren Folgendes umfasst:
Einführen eines Polymerlatex in einen Behälter (30);
Verteilen des Polymerlatex in dem Behälter (30) zu einem Gerinnungsgerät (60) über ein Verteilelement (40) und ein Umverteilungselement (10);
wobei
der Gerinnungsgerät (60) mit einem Rührwerk ausgestattet ist, das eine Rührwerkwelle (20) (20) aufweist,
das Verteilelement (40) an der Rührwerkwelle (20) (20) montiert ist und sich
nach oben in den Behälter (30) durch eine Bodenwand (31) des Behälters (30) hindurch erstreckt, wobei das Verteilelement (40) eine offene Oberseite (42) in dem Behälter (30) und eine gegenüberliegende offene Unterseite (41), die dem Gerinnungsgerät (60) zugewandt ist, aufweist, und
das Umverteilungselement (10) an der Rührwerkwelle (20) montiert ist, das Umverteilungselement
eine offene Oberseite (42) aufweist, die der offenen Unterseite (41) des Verteilungselements
zugewandt ist, und
wobei der Polymerlatex in dem Behälter (30) in die offene Oberseite (42) eintritt und aus der
offenen Unterseite (41) des Verteilelements (40) austritt und in das Umverteilungselement (10) fließt und der Polymerlatex in dem Umverteilungselement in das Gerinnungsgerät (60) überläuft;
Einführen eines Gerinnungsmittels und von Dampf in das Gerinnungsgerät (60);
Mischen des Polymerlatex, des Gerinnungsmittels und des Dampfes, um den Polymerlatex, der das teilchenförmige Polymer bildet, aufzubrechen; und
Abscheiden des teilchenförmigen Polymers aus einer Flüssigkeit im Gerinnungsgerät (60).

2. Verfahren nach Anspruch 1, weiter umfassend Einführen des Polymerlatex in den Behälter (30) über einen Einlass, der an der Bodenwand (31) des Behälters (30) angeordnet ist.

3. Verfahren nach Anspruch 1 oder Anspruch 2, wobei der Polymerlatex ein Polymer aus einem oder mehreren Monomeren eines vinylaromatischen Monomers, ein Acrylat, ein ungesättigtes Cyanid oder ein Dien umfasst.

4. Verfahren nach einem der Ansprüche 1 bis 3, wobei das Gerinnungsmittel über zwei oder mehr gleichmäßig beabstandete Düsen (90) eines Gerinnungsmittel-Sprührings direkt in das Gerinnungsgerät (60) eingeführt wird.

5. Verfahren nach einem der Ansprüche 1 bis 4, wobei das Gerinnungsmittel mindestens eines von einer Säure; einem Alkalimetallsalz; einem Erdalkalimetallsalz; oder einem Ammoniumsalz ist.

6. Verfahren nach einem der Ansprüche 1 bis 5, wobei der Dampf als ein Dampfstrahl (86) unter einer Flüssigkeitsoberfläche in dem Gerinnungsgerät (60) in einer Richtung einer Wirbelströmung (81) in das Gerinnungsgerät (60) eingespritzt wird.

7. Verfahren nach Anspruch 6, wobei der Dampf als mindestens zwei Dampfstrahlen (86) in der Richtung der Wirbelströmung (81) in das Gerinnungsgerät (60) eingespritzt wird.

8. Verfahren nach einem der Ansprüche 1 bis 7, wobei der Polymerlatex, das Gerinnungsmittel und der Dampf in dem Gerinnungsgerät (60) homogen gemischt werden.

9. Verfahren nach einem der Ansprüche 1 bis 8, wobei weniger als 27 Gew.-% des teilchenförmigen Polymers eine Partikelgröße von mehr als 850 Mikrometer aufweist.

10. System zur Herstellung eines teilchenförmigen Polymers gemäß dem Verfahren nach einem der Ansprüche 1-9, wobei das System Folgendes umfasst:
ein Gerinnungsgerät (60), das mit einem Rührwerk ausgestattet ist, das eine Rührwerkwelle (20) aufweist;
ein Verteilelement (40), das auf der Rührwerkwelle (20) montiert ist und sich nach oben in einen Behälter (30) durch eine Bodenwand (31) des Behälters (30) erstreckt, wobei das Verteilelement (40) eine offene Oberseite (42) in dem Behälter (30) und eine gegenüberliegende offene Unterseite (41), die dem Gerinnungsgerät (60) zugewandt ist, aufweist;
ein Umverteilungselement (10), das an der Rührwerkwelle (20) montiert ist, wobei das Umverteilungselement (10) eine offene Oberseite (11) aufweist, die dem Verteilelement (40) zugewandt ist; und
ein Gerinnungsmittelabgabemittel (70) zum Einführen eines Gerinnungsmittels in das Gerinnungsgerät (60),
wobei das Verteilelement (40) und das Umverteilungselement (10) so konfiguriert sind, dass ein Polymerlatex in dem Behälter (30) über die offene Unterseite (41) des Verteilelements (40) in das Umverteilungselement (10) fließt und der Polymerlatex in dem Umverteilungselement (10) in das Gerinnungsgerät (60) überläuft.

11. System nach Anspruch 10, wobei das Verteilelement (40) eine kegelstumpfförmige Wand (43) aufweist, die die offene Oberseite (42) und die offene Unterseite (41) definiert, und die offene Oberseite (42) des Verteilelements (40) einen größeren Oberflächenbereich als die offene Unterseite (41) des Verteilelements (40) aufweist.

12. System nach Anspruch 10 oder 11, wobei das Umverteilungselement (10) eine kegelstumpfförmige Wand (12) aufweist, die die offene Oberseite (11) definiert, die der offenen Unterseite (41) des Verteilelements (40) zugewandt ist.

13. System nach einem der Ansprüche 10 bis 12, weiter umfassend ein rohrförmiges Element (50), um den Polymerlatex über einen Einlass, der an der Bodenwand (31) des Behälters (30) angeordnet ist, in den Behälter (30) einzuführen.

14. System nach einem der Ansprüche 10 bis 13, wobei das Gerinnungsmittelabgabemittel (70) ein Gerinnungsmittel-Sprühring ist, der mindestens zwei gleichmäßig beabstandete Düsen (72) zum Einführen des Gerinnungsmittels direkt in das Gerinnungsgerät (60) aufweist.

15. System nach einem der Ansprüche 10 bis 14, weiter umfassend einen Dampfstrahlinjektor (86), der konfiguriert ist, mindestens zwei Dampfstrahlen (86) in das Gerinnungsgerät (60) einzuspritzen.

## Revendications

1. Procédé de fabrication d'un polymère particulaire, le procédé comprenant :
introduction d'un latex polymère dans un récipient (30) ;
la distribution du latex polymère dans le récipient (30) vers un coagulateur (60) via un élément de distribution (40) et un élément de redistribution (10) ;
dans lequel
le coagulateur (60) est équipé d'un agitateur comportant un arbre d'agitateur (20) (20),
l'élément de distribution (40) est monté sur l'arbre d'agitateur (20) (20) et s'étendant
vers le haut dans le récipient (30) à travers une paroi inférieure (31) du récipient (30), l'élément de distribution (40) ayant une partie supérieure ouverte (42) dans le récipient (30) et une partie inférieure ouverte opposée (41) faisant face au coagulateur (60), et
l'élément de redistribution (10) est monté sur l'arbre d'agitateur (20), l'élément de redistribution
ayant une partie supérieure ouverte (42) faisant face à la partie inférieure ouverte (41) de l'élément de distribution
et
dans lequel le latex polymère dans le récipient (30) pénètre dans la partie supérieure ouverte (42) et sort par la
partie inférieure ouverte (41) de l'élément de distribution (40) et s'écoule dans l'élément de redistribution (10), et le latex polymère dans l'élément de redistribution déborde dans le coagulateur (60) ;
introduction d'un coagulant et de la vapeur dans le coagulateur (60) ;
mélanger le latex polymère, le coagulant et la vapeur pour briser le latex polymère formant le polymère particulaire ; et
séparer le polymère particulaire d'un liquide dans le coagulateur (60).

2. Procédé selon la revendication 1, comprenant en outre l'introduction du latex polymère dans le récipient (30) via une entrée disposée au niveau de la paroi inférieure (31) du récipient (30).

3. Procédé selon la revendication 1 ou 2, dans lequel le latex polymère comprend un polymère d'un ou plusieurs monomères d'un monomère aromatique vinylique, d'un acrylate, d'un cyanure insaturé ou d'un diène.

4. Procédé selon l'une quelconque des revendications 1 à 3, dans lequel le coagulant est introduit directement dans le coagulateur (60) via deux ou plusieurs buses (90) espacées de manière régulière d'un anneau de pulvérisation de coagulant.

5. Procédé selon l'une quelconque des revendications 1 à 4, dans lequel le coagulant est au moins un parmi un acide ; un sel de métal alcalin ; un sel de métal alcalino-terreux ou un sel d'ammonium.

6. Procédé selon l'une quelconque des revendications 1 à 5, dans lequel la vapeur est injectée dans le coagulateur (60) sous forme d'un jet de vapeur (86) au-dessous d'une surface liquide dans le coagulateur (60) dans une direction d'écoulement tourbillonnaire (81).

7. Procédé selon la revendication 6, dans lequel la vapeur est injectée dans le coagulateur (60) sous la forme d'au moins deux jets de vapeur (86) dans une direction d'écoulement tourbillonnaire (81).

8. Procédé selon l'une quelconque des revendications 1 à 7, dans lequel le latex polymère, le coagulant et la vapeur sont mélangés de manière homogène dans le coagulateur (60).

9. Procédé selon l'une quelconque des revendications 1 à 8, dans lequel moins de 27 % en poids du polymère particulaire présente une taille de particules supérieure à 850 microns.

10. Système de fabrication d'un polymère particulaire, selon l'un quelconque des procédés selon les revendications 1 à 9, le système comprenant :
un coagulateur (60) équipé d'un agitateur ayant un arbre d'agitateur (20) ;
un élément de distribution (40) monté sur l'arbre d'agitateur (20) et s'étendant vers le haut dans un récipient (30) à travers une paroi inférieure (31) du récipient (30), l'élément de distribution (40) ayant une partie supérieure ouverte (42) dans le récipient (30) et une partie inférieure ouverte opposée (41) faisant face au coagulateur (60) ;
un élément de redistribution (10) monté sur l'arbre d'agitateur (20), l'élément de redistribution (10) ayant une partie supérieure ouverte (11) faisant face à l'élément de distribution (40) ; et
un moyen de distribution de coagulant (70) pour introduire un coagulant dans le coagulateur (60),
dans lequel l'élément de distribution (40) et l'élément de redistribution (10) sont configurés de telle sorte qu'un latex polymère dans le récipient (30) s'écoule dans l'élément de redistribution (10) via le fond ouvert (41) de l'élément de distribution (40), et que le latex polymère dans l'élément de redistribution (10) déborde dans le coagulateur (60).

11. Système selon la revendication 10, dans lequel l'élément de distribution (40) comporte une paroi tronconique (43) définissant le sommet ouvert (42) et le fond ouvert (41), et le sommet ouvert (42) de l'élément de distribution (40) a une surface plus grande que le fond ouvert (41) de l'élément de distribution (40).

12. Système selon la revendication 10 ou 11, dans lequel l'élément de redistribution (10) comporte une paroi tronconique (12) définissant le sommet ouvert (11) faisant face au fond ouvert (41) de l'élément de distribution (40).

13. Système selon l'une quelconque des revendications 10 à 12, comprenant en outre un élément tubulaire (50) pour introduire le latex polymère dans le récipient (30) via une entrée disposée sur la paroi inférieure (31) du récipient (30).

14. Système selon l'une quelconque des revendications 10 à 13, dans lequel le moyen de distribution de coagulant (70) est un anneau de pulvérisation de coagulant comportant au moins deux buses (72) espacées de manière régulière pour introduire le coagulant directement dans le coagulateur (60).

15. Système selon l'une quelconque des revendications 10 à 14, comprenant en outre un injecteur de jets de vapeur (86) configuré pour injecter au moins deux jets de vapeur (86) dans le coagulateur (60).
